# EUROPEAN PATENT APPLICATION

(11) **EP 3 926 548 A1**
(43) Date of publication of application: **22.12.2021**
(21) Application number: 21163244.3
(22) Date of filing: 17.03.2021
(51) Int. Cl.: G06N 3/08, G06N 3/04

(54) **METHOD AND APPARATUS FOR PRE-TRAINING GRAPH NEURAL NETWORK**

(30) Priority: 16.06.2020 CN 202010549634
(71) Applicant: Beijing Baidu Netcom Science and Technology Co., Ltd., Beijing 100085 (CN)
(72) Inventor: HUANG, Zhengjie, Beijing, Beijing 100085 (CN); LI, Weibin, Beijing, Beijing 100085 (CN); FENG, Shikun, Beijing, Beijing 100085 (CN)
(74) Representative: dompatent von Kreisler Selting Werner - Partnerschaft von Patent- und Rechtsanwälten mbB

(57) **Abstract**

A method and apparatus for pre-training a graph neural network, an electronic device, a readable storage medium and a computer program product, which relate to the technical field of deep learning, are proposed. An embodiment for pre-training a graph neural network includes: acquiring an original sample to be used for training; expanding the original sample to obtain a positive sample and a negative sample corresponding to the \ original sample; constructing a sample set corresponding to the original sample by using the original sample and the positive sample, the negative sample, and a weak sample corresponding to the original sample; and pre-training the graph neural network by taking the original sample and one of other samples in the sample set as input of the graph neural network respectively, until the graph neural network converges. The technical solution may implement pre-training of a graph neural network at a graph level.

## Description

### TECHNICAL FIELD

The present disclosure relates to the technical field of artificial intelligence, and particularly to a method and apparatus for pre-training a graph neural network, an electronic device, a readable storage medium and a computer program product in the technical field of deep learning.

### BACKGROUND

In the existing technology, a Graph Neural Network (GNN) is generally pre-trained by Deepwalk, LINE, Nod2vec or Deep Graph Infomax. However, when the graph neural network is pre-trained by using a wandering algorithm such as Deepwalk, LINE or Nod2vec, on the one hand, it still belongs to node-level pre-training; on the other hand, it often ignores feature information of nodes in a graph, resulting in a poor effect of the graph neural network obtained by pre-training. A Deep Graph Infomax model is also a node-level pre-training model, which does not consider pre-training the graph neural network based on a graph level.

### SUMMARY

An embodiment of the present disclosure proposes a method for pre-training a graph neural network, which includes: acquiring an original sample to be used for training; expanding the original sample to obtain a positive sample and a negative sample corresponding to the original sample; constructing a sample set corresponding to the original sample by using the original sample and the positive sample, the negative sample and a weak sample corresponding to the original sample; and pre-training the graph neural network by taking the original sample and one of other samples in the sample set as input of the graph neural network respectively, until the graph neural network converges.

An embodiment of the present disclosure proposes an apparatus for pre-training a graph neural network, which includes: an acquisition unit configured to acquire an original sample to be used for training; a processing unit configured to expand the original sample to obtain a positive sample and a negative sample corresponding to the original sample; a construction unit configured to construct a sample set corresponding to the original sample by using the original sample and the positive sample, the negative sample, and a weak sample corresponding to the original sample; and a training unit configured to pre-train the graph neural network by taking the original sample and one of other samples in the sample set as input of the graph neural network respectively, until the graph neural network converges.

One embodiment in the present disclosure has the following advantages or beneficial effects: the present disclosure can implement pre-training of a graph neural network at a graph level. Since a technical means of acquiring different samples corresponding to original samples to pre-train a graph neural network by contrastive learning, the technical problem in the existing technology that the graph neural network can be pre-trained only based on a node level is overcome, achieving a technical effect of pre-training the graph neural network based on a graph level.

Other effects of the above optional manners will be explained below in combination with specific embodiments.

### BRIEF DESCRIPTION OF THE DRAWINGS

The accompanying drawings are intended to better understand the solutions and do not limit the present disclosure. In the drawings,
Fig. 1 is a schematic diagram according to a first embodiment of the present disclosure.
Fig. 2 is a schematic diagram according to a second embodiment of the present disclosure.
Fig. 3 is a block diagram of an electronic device configured to implement a method for pre-training a graph neural network according to an embodiment of the present disclosure.

### DETAILED DESCRIPTION OF EMBODIMENTS

Exemplary embodiments of the present disclosure are described below with reference to the accompanying drawings, including various details of the embodiments of the present disclosure to facilitate understanding, and they should be considered as exemplary only. Therefore, those of ordinary skill in the art should be aware that the embodiments described here may be changed and modified in various ways without deviating from the scope and spirit of the present disclosure. Similarly, for the sake of clarity and simplicity, descriptions of well-known functions and structures are omitted in the following description.

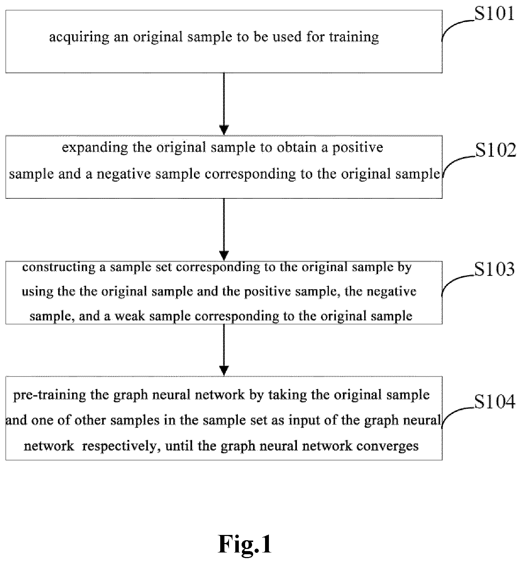

Fig. 1 is a schematic diagram according to a first embodiment of the present disclosure. As shown in Fig. 1, a method for pre-training a graph neural network in this embodiment includes the following steps:
S101: acquiring an original sample to be used for training;
S102: expanding the original sample to obtain a positive sample and a negative sample corresponding to the original sample;
S103: constructing a sample set corresponding to the original sample by using the original sample and the positive sample, the negative sample and a weak sample corresponding to the original sample; and
S104: pre-training the graph neural network by taking the original sample and one of other samples in the sample set as input of the graph neural network respectively, until the graph neural network converges.

According to the method for pre-training a graph neural network in this embodiment, a different sample of a corresponding original sample is acquired so as to implement graph-level pre-training of the graph neural network based on contrastive learning. The graph neural network is a deep learning architecture for graph structure data, and the graph neural network obtained by pre-training in this embodiment can judge whether two graphs are similar.

The type of the original sample to be used for training acquired in this embodiment is Graph, which is a graph including a plurality of Nodes and Edges each connecting two nodes and is used to depict relationships between different nodes.

Therefore, the original sample to be used for training acquired in this embodiment may be a social network graph (users are nodes and user relationships are edges), a molecular structure graph (atoms are nodes and chemical bonds are edges), an electronic shopping graph (users and goods are nodes and connections between users and goods are edges), and so on.

In this embodiment, after the original sample to be used for training is acquired, the original sample is expanded to obtain a positive sample and a negative sample corresponding to the original sample. That is to say, in this embodiment, a triple corresponding to the original sample can be acquired by sample expanding. Each triple includes the original sample, the positive sample corresponding to the original sample and the negative sample corresponding to the original sample.

Since the original sample to be used for training acquired is a graph, in this embodiment, the original sample may be expanded to obtain the positive sample corresponding to the original sample in the following manners: processing the original sample by at least one of hiding attribute of part of nodes, hiding attribute of part of edges, adding an edge between part of nodes and deleting an edge between part of nodes; and taking the result of processing as the positive sample corresponding to the original sample.

In this embodiment, when the original sample is processed by hiding attribute of part of nodes, attribute of an node in the original sample may be set to 0 according to a first preset probability, that is, part of nodes in the original sample do not have attribute. In this embodiment, when the original sample is processed by hiding attribute of part of edges, attribute of an edge in the original sample may be set to 0 according to a second preset probability, that is, part of edges in the original sample do not have attribute. In this embodiment, when the original sample is processed by adding an edge between part of nodes, two nodes may be randomly connected according to a third preset probability, that is, relationships between part of nodes and other nodes in the original sample are added. In this embodiment, when the original sample is processed by deleting an edge between part of nodes, an edge between nodes may be deleted according to a fourth probability, that is, a relationship between part of nodes and other nodes in the original sample is deleted.

It may be understood that the first preset probability, the second preset probability, the third preset probability and the fourth preset probability in this embodiment may be the same value or different values, and may be set by a user according to an actual application scenario.

In this embodiment, the positive sample is obtained by changing attribute of part of nodes, attribute of part of edges or partial structures in the original sample, so that there is a certain difference between the original sample and the expanded positive sample; however, the difference has little influence on the original sample, which is not enough for the graph neural network to distinguish the original sample from the positive sample. Therefore, by expanding the original sample to obtain the positive sample, the graph neural network obtained by training can judge two graphs with certain similarity as similar, so as to improve generalization capability of the graph neural network when judging whether graphs are similar.

In this embodiment, the original sample may be expanded to obtain the negative sample corresponding to the original sample in the following manners: processing the original sample by at least one of hiding attributes of all nodes, hiding attributes of all edges and changing structures of all nodes in the samples; and taking the result of processing as the negative sample corresponding to the original sample. In this embodiment, when structures of all nodes in the samples are changed, edges between nodes may be randomly added after all edges between the nodes are deleted, so that the result of processing is completely different from the original sample.

In this embodiment, the negative sample is obtained by changing attributes of all nodes, attributes of all edges or all structures in the original samples, so that there is a big difference between the original sample and the expanded negative sample, which is enough to enable the graph neural network to distinguish the original sample from the negative sample. Therefore, by expanding the original sample to obtain the negative sample, the graph neural network obtained by training can more accurately distinguish two completely different graphs.

In this embodiment, after the positive sample and the negative sample corresponding to the original sample are obtained by expanding, a sample set corresponding to the original sample is constructed by using the original sample and the positive sample, the negative sample, and a weak sample corresponding to the original sample. In this embodiment, the weak sample corresponding to the original sample includes at least one of a positive sample and a negative sample corresponding to another original sample.

In this embodiment, the sample set corresponding to the original sample is constructed by introducing the positive sample and/or the negative sample corresponding to another original sample, which, on the one hand, can effectively increase the number of training samples included in the sample set, and on the other hand, can promote a contrast effect between different training samples during pre-training of the graph neural network, thus improving the capability of the graph neural network to distinguish graphs in different categories.

For example, if the original sample to be used for training acquired include an original sample A and an original sample B, a positive sample A and a negative sample A correspond to the original sample A, and a positive sample B and a negative sample B correspond to the original sample B, a weak sample(or weak samples) corresponding to the original sample A may be at least one of the positive sample B and the negative sample B, and a weak sample (or weak samples) corresponding to the original sample B may be at least one of the positive sample A and the negative sample A.

In order to increase the number of samples included in the sample set corresponding to the original sample and make a contrast effect between different training samples more obvious, the weak sample corresponding to the original sample in this embodiment preferably include a positive sample and a negative sample corresponding to another original sample.

In this embodiment, after the sample set corresponding to the original sample is constructed, the original sample and one of other samples in the sample set are taken as input of the graph neural network respectively, loss functions are obtained according to output results of the graph neural network, and then parameters of the graph neural network are adjusted according to the loss functions, until the graph neural network converges, so as to complete pre-training of the graph neural network.

It may be understood that, in this embodiment, the loss function of the graph neural network may be expressed by a multi-class cross entropy loss function or by other types of damage functions. In addition, in this embodiment, determination of the convergence of the graph neural network may include: determining that the loss functions are less than or equal to a preset threshold, or that loss functions obtained within a preset number of times are equal, or that a difference between the loss functions obtained within the preset number of times is less than or equal to the preset threshold, and so on.

Therefore, in this embodiment, when a graph neural network is pre-trained in the above manner, an original sample is expanded to acquire a positive sample and a negative sample corresponding thereto first, then a sample set corresponding to the original sample is constructed, and finally the graph neural network is pre-trained by using the original sample and other samples in the sample set, so as to achieve graph-level pre-training of the graph neural network based on contrastive learning.

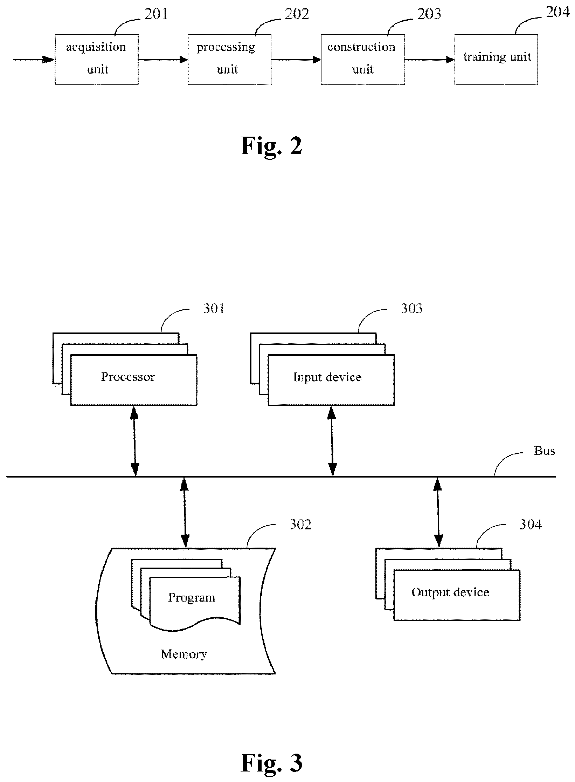

Fig. 2 is a schematic diagram according to a second embodiment of the present disclosure. As shown in Fig. 2, an apparatus for pre-training a graph neural network in this embodiment includes:
an acquisition unit 201 that acquires an original sample to be used for training;
a processing unit 202 that expand the original sample to obtain a positive sample and a negative sample corresponding to the original sample;
a construction unit 203 that constructs a sample set corresponding to the original sample by using the original sample and the positive sample, the negative sample, and a weak sample corresponding to the original sample; and
a training unit 204 that pre-trains the graph neural network by taking the original sample and one of other samples in the sample set as input of the graph neural network respectively, until the graph neural network converges.

The type of the original sample to be used for training acquired by the acquisition unit 201 is Graph, which is a graph including a plurality of Nodes and Edges connecting two nodes and is used to depict relationships between different nodes.

After the acquisition unit 201 acquires the original sample to be used for training, the processing unit 202 expands the original sample to obtain a positive sample and a negative sample corresponding to the original sample. That is to say, the processing unit 202 can acquire a triple corresponding to the original sample by sample expanding. Each triple includes the original sample, the positive sample corresponding to the original sample and the negative sample corresponding to the original sample.

Since the original sample to be used for training acquired is a graph, the processing unit 202 may expand the original sample to obtain a positive sample corresponding to the original sample in the following manners: processing the original sample by at least one of hiding attribute of part of nodes, hiding attribute of part of edges, adding an edge between part of nodes and deleting an edge between part of nodes; and taking the result of processing as the positive sample corresponding to the original sample.

When the processing unit 202 processes the original sample by hiding attribute of part of nodes, attribute of an node in the original sample may be set to 0 according to a first preset probability, that is, part of nodes in the original sample do not have attribute. When the processing unit 202 processes the original samples by hiding attribute of part of edges, attribute of an edge in the original sample may be set to 0 according to a second preset probability, that is, part of edges in the original sample do not have attribute. When the processing unit 202 processes the original sample by adding an edge between part of nodes, two nodes may be randomly connected according to a third preset probability, that is, relationships between part of nodes and other nodes in the original sample are added. When the processing unit 202 processes the original sample by deleting an edge between part of nodes, an edge between nodes may be deleted according to a fourth probability, that is, relationships between part of nodes and other nodes in the original sample are deleted.

It may be understood that the first preset probability, the second preset probability, the third preset probability and the fourth preset probability in the processing unit 202 may be the same value or different values, and may be set by a user according to an actual application scenario.

The processing unit 202 may expand the original sample to obtain the negative sample corresponding to the original sample in the following manners: processing the original sample by at least one of hiding attributes of all nodes, hiding attributes of all edges and changing structures of all nodes in the sample; and taking the result of processing as the negative sample corresponding to the original sample.

After the processing unit 202 obtains the positive sample and the negative sample corresponding to the original sample by expanding, the construction unit 203 constructs a sample set corresponding to the original sample by using the original sample and the positive sample, the negative sample, and a weak sample corresponding to the original sample. The weak sample corresponding to the original sample in the construction unit 203 includes at least one of a positive sample and a negative sample corresponding to another original sample.

In order to increase the number of samples included in the sample set corresponding to the original sample and make a contrast effect between different training samples more obvious, the weak sample corresponding to the original sample in the construction unit 203 preferably include a positive sample and a negative sample corresponding to another original sample.

After the construction unit 203 constructs a sample set corresponding to the original sample, the training unit 204 takes the original sample and one of other samples in the sample set as input of the graph neural network respectively, obtains loss functions according to output results of the graph neural network, and then adjusts parameters of the graph neural network according to the loss functions, until the graph neural network converges, so as to complete pre-training of the graph neural network.

It may be understood that, the loss function of the graph neural network in the training unit 204 may be expressed by a multi-class cross entropy loss function or by other types of damage functions. In addition, when the training unit 204 determines the convergence of the graph neural network, it may include: determining that the loss functions are less than or equal to a preset threshold, or that loss functions obtained within a preset number of times are equal, or that a difference between the loss functions obtained within the preset number of times is less than or equal to the preset threshold, and so on.

According to an embodiment of the present disclosure, the present disclosure further provides an electronic device, a computer-readable storage medium and a computer program product.

As shown in Fig. 3, it is a block diagram of an electronic device for implementing a method for pre-training a graph neural network according to an embodiment of the present disclosure. The electronic device is intended to represent various forms of digital computers, such as laptops, desktops, workbenches, personal digital assistants, servers, blade servers, mainframe computers and other suitable computers. The electronic device may further represent various forms of mobile devices, such as personal digital assistants, cellular phones, smart phones, wearable devices and other similar computing devices. The components, their connections and relationships, and their functions shown herein are examples only, and are not intended to limit the implementation of the present disclosure as described and/or required herein.

As shown in Fig. 3, the electronic device includes: one or more processors 301, a memory 302, and interfaces for connecting various components, including high-speed and low-speed interfaces. The components are connected to each other by using different buses and may be mounted on a common motherboard or otherwise as required. The processor may process instructions executed in the electronic device, including instructions stored in the memory or on the memory to display graphical information of a GUI on an external input/output device (such as a display device coupled to the interfaces). In other implementation modes, a plurality of processors and/or buses may be used together with a plurality of memories, if necessary. Similarly, a plurality of electronic devices may be connected, each of which provides some necessary operations (for example, as a server array, a set of blade servers, or a multiprocessor system). One processor 301 is taken as an example is Fig. 3.

The memory 302 is the non-instantaneous computer-readable storage medium provided in the present disclosure. The memory stores instructions executable by at least one processor to make the at least one processor perform the method for pre-training a graph neural network provided in the present disclosure. The non-instantaneous computer-readable storage medium in the present disclosure stores computer instructions. The computer instructions are used to make a computer perform the method for pre-training a graph neural network provided in the present disclosure.

The memory 302, as a non-instantaneous computer-readable storage medium, may be configured to store non-instantaneous software programs, non-instantaneous computer-executable programs and modules, for example, program instructions/modules (e.g. the acquisition unit 201, the processing unit 202, the construction unit 203 and the training unit 204 shown in Fig. 2) corresponding to the method for pre-training a graph neural network in the embodiments of the present disclosure. The processor 301 runs the non-instantaneous software programs, instructions and modules stored in the memory 302 to execute various functional applications and data processing of a server, that is, to implement the method for pre-training a graph neural network in the above method embodiments.

The memory 302 may include a program storage area and a data storage area. The program storage area may store an operating system and an application required by at least one function; and the data storage area may store data created according to use of the electronic device. In addition, the memory 302 may include a high-speed random access memory, and may further include a non-instantaneous memory, for example, at least one disk storage device, a flash memory device, or other non-instantaneous solid-state storage devices. In some embodiments, the memory 302 optionally includes memories remotely disposed relative to the processor 301. The remote memories may be connected to the electronic device for implementing the method for pre-training a graph neural network over a network. Examples of the network include, but are not limited to, the Internet, intranets, local area networks, mobile communication networks and combinations thereof.

The electronic device for implementing the method for pre-training a graph neural network may further include: an input device 303 and an output device 304. The processor 301, the memory 302, the input device 303 and the output device 304 may be connected through a bus or in other manners. In Fig. 3, the connection through a bus is taken as an example.

The input device 303 may receive input numerical information or character information, and generate key signal input related to user setting and function control of the electronic device for implementing the method for pre-training a graph neural network, for example, input devices such as a touch screen, a keypad, a mouse, a trackpad, a touch pad, a pointer, one or more mouse buttons, a trackball, and a joystick. The output device 304 may include a display device, an auxiliary lighting device (e.g., an LED) and a tactile feedback device (e.g., a vibration motor). The display device may include, but is not limited to, a liquid crystal display (LCD), a light-emitting diode (LED) display and a plasma display. In some implementation modes, the display device may be a touch screen.

Various implementation modes of the systems and technologies described here can be implemented in a digital electronic circuit system, an integrated circuit system, an ASIC (application-specific integrated circuit), computer hardware, firmware, software, and/or combinations thereof. The various implementation modes may include: being implemented in one or more computer programs, wherein the one or more computer programs may be executed and/or interpreted on a programmable system including at least one programmable processor, and the programmable processor may be a special-purpose or general-purpose programmable processor, receive data and instructions from a storage system, at least one input device and at least one output device, and transmit the data and the instructions to the storage system, the at least one input device and the at least one output device.

The computing programs (also referred to as programs, software, software applications, or code) include machine instructions for programmable processors, and may be implemented by using high-level procedural and/or object-oriented programming languages, and/or assembly/machine languages. As used herein, the terms "machine-readable medium" and "computer-readable medium" refer to any computer program product, device, and/or apparatus (e.g., a magnetic disk, an optical disc, a memory, and a programmable logic device (PLD)) configured to provide machine instructions and/or data to a programmable processor, including a machine-readable medium that receives machine instructions serving as machine-readable signals. The term "machine-readable signal" refers to any signal for providing the machine instructions and/or data to the programmable processor.

To provide interaction with a user, the systems and technologies described here can be implemented on a computer. The computer has: a display device (e.g., a CRT (cathode-ray tube) or an LCD (liquid crystal display) monitor) for displaying information to the user; and a keyboard and pointing device (e.g., a mouse or trackball) through which the user may provide input for the computer. Other kinds of apparatuses may also be configured to provide interaction with the user. For example, a feedback provided for the user may be any form of sensory feedback (for example, visual, auditory, or tactile feedback); and input from the user may be received in any form (including sound input, voice input, or tactile input).

The systems and technologies described here can be implemented in a computing system including background components (for example, as a data server), or a computing system including middleware components (for example, an application server), or a computing system including front-end components (for example, a user computer with a graphical user interface or webpage browser through which the user can interact with the implementation mode of the systems and technologies described here), or a computing system including any combination of such background components, middleware components or front-end components. The components of the system can be connected to each other through any form or medium of digital data communication (for example, a communication network). Examples of the communication network include: a local area network (LAN), a wide area network (WAN), and the Internet.

The computer system may include a client and a server. The client and the server are generally far away from each other and generally interact via the communication network. A relationship between the client and the server is generated through computer programs that run on a corresponding computer and have a client-server relationship with each other.

According to the technical solutions in the embodiments of the present disclosure, when a graph neural network is pre-trained in the above manner, original samples are amplified to acquire positive samples and negative samples corresponding thereto first, then sample sets corresponding to the original samples are constructed, and finally the graph neural network is pre-trained by using the original samples and other samples in the sample sets, so as to achieve graph-level pre-training of the graph neural network based on contrastive learning.

It should be understood that the steps can be reordered, added, or deleted by using the various forms of processes shown above. For example, the steps described in the present disclosure may be executed in parallel or sequentially or in different sequences, provided that the desired results of the technical solutions disclosed in the present disclosure can be achieved, which are not limited herein.

The above specific implementation mode does not limit the extent of protection of the present disclosure. Those skilled in the art should understand that various modifications, combinations, sub-combinations, and replacements can be made according to design requirements and other factors. Any modifications, equivalent substitutions and improvements made within the spirit and principle of the present disclosure all should be included in the extent of protection of the present disclosure.

## Claims

1. A method for pre-training a graph neural network, comprising:
acquiring (S101) an original sample to be used for training;
expanding (S102) the original sample to obtain a positive sample and a negative sample corresponding to the original sample;
constructing (S103) a sample set corresponding to the original sample by using the original sample and the positive sample, the negative sample and a weak sample corresponding to the original sample; and
pre-training (S104) the graph neural network by taking the original sample and one of other samples in the sample set as input of the graph neural network respectively, until the graph neural network converges.

2. The method according to claim 1, wherein expanding (S102) the original sample to obtain the positive sample corresponding to the original sample comprises:
processing the original sample by at least one of: hiding attribute of part of nodes, hiding attribute of part of edges, adding an edge between part of nodes and deleting an edge between part of nodes; and
taking the result of processing as the positive sample corresponding to the original sample.

3. The method according to claim 1 or 2, wherein expanding (S102) the original sample to obtain the negative sample corresponding to the original sample comprises:
processing the original sample by at least one of: hiding attributes of all nodes, hiding attributes of all edges and changing structures of all nodes in the original sample; and
taking the result of processing as the negative sample corresponding to the original sample.

4. The method according to any of claims 1-3, wherein the weak sample corresponding to the original sample comprises at least one of a positive sample and a negative sample corresponding to another original sample.

5. The method according to any of claims 1-4, wherein the original sample is a graph comprising a plurality of nodes and edges between the nodes.

6. The method according to claim 3, wherein changing the structures of all nodes in the original sample comprises:
deleting all edges between nodes and adding new edges between node randomly.

7. The method according to any of claims 1-6, wherein a difference between the positive sample corresponding to the original sample and the original sample is not enough to make the graph neural network to distinguish the positive sample from the original sample.

8. The method according to any of claims 1-7, wherein a difference between the negative sample corresponding to the original sample and the original sample is enough to make the graph neural network to distinguish the negative sample from the original sample.

9. An apparatus for pre-training a graph neural network, comprising:
an acquisition unit (201) configured to acquire (S101) an original sample to be used for training;
a processing unit (202) configured to expand (S102) the original sample to obtain a positive sample and a negative sample corresponding to the original sample;
a construction unit (203) configured to construct (S103) a sample set corresponding to the original samples by using the original sample and the positive sample, the negative sample, and a weak sample corresponding to the original sample; and
a training unit (204) configured to pre-train (S104) the graph neural network by taking the original sample and one of other samples in the sample set as input of the graph neural network respectively, until the graph neural network converges.

10. The apparatus according to claim 9, wherein when expanding (S102) the original sample to obtain the positive sample corresponding to the original sample, the processing unit (202) specifically performs:
processing the original sample by at least one of: hiding attribute of part of nodes, hiding attribute of part of edges, adding an edge between part of nodes and deleting an edge between part of nodes; and
taking the result of processing as the positive sample corresponding to the original sample.

11. The apparatus according to claim 9 or 10, wherein when expanding (S102) the original sample to obtain the negative sample corresponding to the original sample, the processing unit (202) specifically performs:
processing the original samples by at least one of: hiding attributes of all nodes, hiding attributes of all edges and changing structures of all nodes in the samples; and
taking the result of processing as the negative sample corresponding to the original sample.

12. The apparatus according to any of claims 9-11, wherein the weak sample corresponding to the original sample in the construction unit comprises at least one of a positive sample and a negative sample corresponding to another original sample.

13. An electronic device, comprising:
one or more processors(301); and
a memory (302) in a communication connection with the at least one processor(301), wherein
the memory (302) stores instructions executable by the at least one processor(301), and the instructions are executed by the at least one processor (301) to enable the at least one processor (301) to perform the method according to any one of claims 1 to 8.

14. A non-transitory computer-readable storage medium comprising computer instructions, which when executed by a computer, cause the computer to carry out the method according to any one of claims 1 to 8.

15. A computer program product comprising instructions which, when the program is executed by a computer, cause the computer to carry out the method according to any of claims 1-8.
